# EUROPÄISCHE PATENTSCHRIFT

(11) **EP 3 865 446 B1**
(45) Veröffentlichungstag und Bekanntmachung des Hinweises auf die Patenterteilung: **12.04.2023**
(21) Anmeldenummer: 21156194.9
(22) Anmeldetag: 10.02.2021
(51) Int. Cl.: B66B 5/14, F16H 1/20, F16H 37/12

(54) **GETRIEBE**
TRANSMISSION
BOÎTE DE VITESSES

(30) Priorität: 12.02.2020 DE 102020103686
(43) Veröffentlichungstag der Anmeldung: 18.08.2021
(73) Patentinhaber: Framo Morat GmbH & Co. KG, 79871 Eisenbach (DE)
(72) Erfinder: Kuster, Holger, 79199 Kirchzarten (DE); Koch, Marcel, 79843 Löffingen (DE)
(74) Vertreter: Geitz Truckenmüller Lucht Christ

(56) Entgegenhaltungen:
- EP-A2- 0 274 656
- EP-A2- 0 787 885
- CN-A- 110 735 900
- DE-A1- 4 406 436

## Beschreibung

Die Erfindung geht aus von einem Getriebe mit einer Getriebebasis, einer Antriebswelle, welche mit einem Motor verbindbar ist, und einer Abtriebswelle, welche mit einer Maschine oder mit einem anzutreibenden Bauteil verbindbar ist.

Getriebe dienen dazu, die Drehzahlen oder Drehmomente eines Motors zu übersetzen oder Drehrichtungen zu ändern. Sie können mit Zahnrädern, Riemen oder Ketten ausgestattet sein. Bei Getrieben, die in Antrieben für Aufzüge, Lifte, Kräne oder sonstige Vorrichtungen zum Verladen und Transportieren von Lasten eingesetzt sind, besteht darüber hinaus die Anforderung, dass im Falle einer Beschädigung des Getriebes durch Abnutzung oder Bruch eines Getriebeteils die Last in einer vorgegebenen Ausrichtung oder Position gehalten wird, um eine Verletzung von Personen oder eine Beschädigung der Last zu vermeiden. Insbesondere muss verhindert werden, dass die von dem beschädigten Getriebe nicht mehr zuverlässig gehaltene Last abkippt oder abrutscht. Hierzu kann ein zweiter Antrieb mit einem zweiten Motor und einem zweiten Getriebe vorvorgesehen sein, wobei der zweite Antrieb im Bedarfsfall die Last abfängt. Dies ist jedoch mit einem erheblichen Aufwand verbunden.

Die EP 0 274 656 A2 offenbart eine Fangvorrichtung gegen ungewolltes Abrollen eines Rolltores. Hierzu ist ein Getriebe mit einem Reibrichtgesperre vorgesehen. Das Getriebe umfasst eine Antriebsschnecke, die mit ihrer Verzahnung im Eingriff mit einem ersten Schneckenrad steht. Dieses ist mit einer Rolltorwelle drehfest verbunden. Ein zweites Schneckenrad ist an einer Seite des ersten Schneckenrades gegenüber diesem sowie gegenüber der Rolltorwelle drehbeweglich auf der Rolltorwelle gelagert und steht ebenfalls im Eingriff mit der Verzahnung der Antriebsschnecke. Das zweite Schneckenrad ist mit Nocken ausgestattet. Die Rolltorwelle trägt im Bereich des zweiten Schneckenrades einen Flansch mit einer polygonförmigen Berandung, welche eine Stützfläche aufweist. Ein gehäusefester Anschlag ist mit einer zylinderförmigen Stützfläche ausgestattet. Zwischen den beiden Stützflächen befinden sich Sperrkörper, die durch die Nocken positioniert werden. Im Normalbetrieb kämmt die Antriebsschnecke des Getriebes mit beiden Schneckenrädern, so dass die Sperrkörper etwa in der Mitte der Stützflächen gehalten werden. Wenn ein Störfall durch Verschleiß der Zähne des ersten Schneckenrades eintritt, steht das erste Schneckenrad nicht mehr in Eingriff mit der Antriebsschnecke, während das zweite Schneckenrad immer noch mit der Antriebsschnecke in Eingriff steht. Dies führt zu einer Verdrehung der beiden Schneckenräder gegeneinander bis zu einer Lage, bei der die Sperrkörper zwischen den beiden Stützflächen eingeklemmt werden. Durch die Sperrkörper wird das Drehmoment an der Rolltorwelle direkt auf den gehäusefesten Anschlag übertragen. Als nachteilig erweist sich jedoch, dass eine Arretierung in zuverlässiger Weise nur dann erfolgt, wenn eine Beschädigung des ersten Schneckenrades vorliegt. Bei einer Beschädigung des Antriebsschnecke ist die Funktion der Fangvorrichtung nicht gewährleistet, da das erste Schneckenrad und das zweite Schneckenrad im gleichen Abschnitt mit der Antriebsschnecke in Eingriff stehen.

Die DE 44 06 436 A1 offenbart ein mit Sicherheitsschneckenrad ausgestattetes Schneckengetriebe für Rolltore und Aufzüge. Das Getriebe umfasst eine Hohlwelle, mit der ein Schneckenrad drehfest verbunden ist. Auf einer einseitig verbreiterten Nabe des Schneckenrades befindet sich ein Gewinde. Über das Gewinde ist das Sicherheitsschneckenrad lose mit dem Schneckenrad verschraubt. Im Normalbetrieb wird das Antriebsmoment von einer Schnecke auf das Schneckenrad übertragen. Das Sicherheitsschneckenrad greift dabei mit seiner Verzahnung ebenfalls in die Windungen der Schnecke ein und läuft synchron im Leerlauf mit, ohne dabei ein Moment zu übertragen. Im Störfall, wenn sich durch Bruch oder Verschleiß des Schneckenrades dieses infolge der Belastung von der Hohlwelle schneller dreht als das Sicherheitsschneckenrad, schraubt sich das Sicherheitsschneckenrad an das Schneckenrad und an die Schnecke dicht heran. Damit wird die Funktion aufrechterhalten und die Last gegen Absturz gesichert. Die Verschraubung des Sicherheitsschneckenrades mit dem Schneckenrad bewirkt einen axialen Versatz desselben, wodurch ein Schalter ausgelöst wird, der einen Antriebsmotor ausschaltet. Es findet keine Arretierung des Getriebes statt.

Die EP 0 787 885 A2 offenbart eine Vorrichtung zum automatischen Arretieren von motorisierten Rollläden, wenn die Kupplung zwischen den Zähnen einer Antriebsschnecke und des direkt auf der Rollladenwelle des Getriebemotors verzahnten Rades aufgrund von Verschleiß oder Beschädigung beeinträchtigt ist oder vollständig versagt. Die Vorrichtung umfasst eine Schneckenschraube, welche gleichzeitig mit zwei benachbarten Zahnrädern, nämlich einem Haupt- und einem Sekundärrad in Eingriff steht. Das Hauptrad ist über einen Flansch drehfest mit der Rollladenwelle verbunden. Wenn sich die Schnecke ungewollt vom Hauptrad löst, bleibt sie dennoch im Eingriff mit dem Sekundärrad und treibt dieses weiter zur Rotation an. Dadurch dreht sich das Sekundärrad relativ zu dem Hauptrad. Diese Drehung der beiden Schneckenräder relativ zueinander führt zu einer axialen Verschiebung des Sekundärrades. Dabei greifen an dem Sekundärrad angeordnete Zähne in eine Wand eines Gehäuses ein. Dies führt zu einer Arretierung des Flansches und damit der Rollladenwelle an dem Gehäuse. Als nachteilig erweist sich auch bei diesem Getriebe, dass eine Arretierung in zuverlässiger Weise nur dann erfolgt, wenn eine Beschädigung des Hauptrades vorliegt. Bei einer Beschädigung der Schneckenschraube ist die Funktion der Fangvorrichtung nicht gewährleistet, da das Hauptrad und das Sekundärrad im gleichen Abschnitt mit der Antriebsschnecke in Eingriff stehen.

Die CN 110 735 900 A offenbart ein Getriebeelement und einen Stellantrieb mit einem Motor und mit einem Stellanschluss als Abtriebsanschluss zum Anschließen einer Klappe oder eines Ventils, um einen gewünschten Volumen- bzw. Luftstrom durch eine Drehstellbewegung am Stellanschluss einzustellen. Der Stellantrieb umfasst einen Elektromotor, dessen Antriebsenergie über ein Getriebeelement auf einen Stellanschluss übertragen wird. Bei einer Bewegung des Stellantriebs in einer Antriebsrichtung wird ein Rücklauffederelement eines Federrücklaufs vorgespannt. Um ein sofortiges Bewegen des Getriebeelements und damit des Federrücklaufs des Stellantriebs bei einer Abschaltung des Motors in die Rücklaufrichtung zu verhindern, weist das Getriebeelement ein Arretierelement auf, das in die Bezahnung eines Zahnrads des Getriebeelements eingreift. Es erfolgt jedoch keine Arretierung des Getriebeelements im Falle einer Beschädigung des Getriebes.

Der Erfindung liegt die Aufgabe zugrunde, ein Getriebe zur Verfügung zu stellen, bei dem das Versagen des im Betrieb belasteten Getriebes aufgrund einer Beschädigung oder Beeinträchtigung mindestens eines Getriebeteils dazu führt, dass die Abtriebswelle in ihrer Einstellung gehalten wird, ohne dass hierzu ein zweiter Antrieb oder eine besondere Messtechnik notwendig sind.

Diese Aufgabe wird durch ein Getriebe mit den Merkmalen des Anspruchs 1 gelöst. Das Getriebe weist einen ersten Getriebezug und einen zweiten Getriebezug auf, welche beide mit der Antriebswelle wirkverbunden sind und durch die Antriebswelle angetrieben sind. Wirkverbunden bedeutet dabei, dass ein Drehmoment von der Antriebswelle auf den ersten und zweiten Getriebezug übertragen wird. Da der erste Getriebezug und der zweite Getriebezug mit der Antriebswelle wirkverbunden sind, sind die beiden Getriebezüge synchronisiert, solange sie frei von einer Beschädigung oder Beeinträchtigung sind. Nur der erste Getriebezug ist mit der Abtriebswelle verbunden. Eine mit der Abtriebswelle verbundene Last wird daher auch nur von dem ersten Getriebezug gehalten, daher ist der erste Getriebezug belastet. Der zweite Getriebezug ist nicht mit der Abtriebswelle verbunden. Er ist unbelastet. Er dient lediglich dazu, im Falle einer Beschädigung oder Beeinträchtigung des ersten Getriebezuges diesen zu verriegeln und damit die Abtriebswelle in ihrer Einstellung zu fixieren, so dass eine mit der Abtriebswelle verbundene Last oder Maschine ihre Position beibehält.

Der erste Getriebezug kann ein Zahnradgetriebezug, ein Riemengetriebezug oder ein Kettengetriebezug sein. Entsprechendes gilt für den zweiten Getriebezug. Bei dem Zahnradgetriebezug kann es sich um ein Schneckengetriebezug, Stirnradgetriebezug oder Planetengetriebezug handeln.

Der erste Getriebezug und der zweite Getriebezug können gleichartig oder verschieden sein.

Der erste Getriebezug umfasst die kinematische Kette aller Getriebeteile von der Antriebswelle bis zur Abtriebswelle, wobei die Antriebswelle und die Abtriebswelle nicht zum ersten Getriebezug gehören. Die Getriebeteile des ersten Getriebezugs umfassen ein erstes Getriebeteil.

Der zweite Getriebezug umfasst die kinematische Kette aller Getriebeteile von der Antriebswelle bis zum Verriegelungsteil, wobei die Antriebswelle nicht zum zweiten Getriebezug gehört. Die Getriebeteile des zweiten Getriebezugs umfassen ein zweites Getriebeteil. Der erste Getriebezug und der zweite Getriebezug können an ihrem der Antriebswelle zugewandten Ende überlappen. Dies hängt davon ab, an welchem Getriebeteil der zweite Getriebezug von dem ersten Getriebezug abzweigt. Liegt die Verzweigung direkt an der Antriebswelle, so überlappen der erste und zweite Getriebezug nicht. Treibt die Antriebswelle beispielsweise eine Schnecke an, mit der ein erstes Schneckenrad des ersten Getriebezuges und ein zweites Schneckenrad des zweiten Getriebezuges in Wirkeingriff stehen, so überlappen die beiden Getriebezüge in Bezug auf die Schnecke. Liegt eine Beschädigung des ersten Getriebezuges in einem mit dem zweiten Getriebezug überlappenden Teil des Getriebes vor, erfolgt keine Verriegelung des ersten Getriebezuges, da in diesem Fall die Beschädigung nicht zu einer Asynchronität zwischen dem ersten und zweiten Getriebezug führt.

Der erste Getriebezug kann einstufig oder mehrstufig sein. Entsprechendes gilt für den zweiten Getriebezug.

Ein erstes Getriebeteil des ersten Getriebezugs und ein zweites Getriebeteil des zweiten Getriebezugs sind aufgrund der Synchronisation des ersten und zweiten Getriebezugs gleichlaufend, solange der erste Getriebezug frei von einer Beschädigung ist. Da nur der erste Getriebezug im Anwendungsfall belastet ist, unterliegt er in wesentlich größerem Umfang der Abnutzung und dem Verschleiß als der zweite Getriebezug. Die Gefahr einer Beschädigung ist daher beim ersten Getriebezug wesentlich größer als beim zweiten Getriebezug. Handelt es sich beispielsweise bei dem ersten Getriebezug um ein Zahnradgetriebezug, so kann eine Beschädigung in Form eines Zahnbruchs oder einer Abnutzung der Verzahnung vorliegen. Sowohl ein Zahnbruch als auch eine Abnutzung der Verzahnung führen zu einem erhöhten Getriebespiel. Die Beschädigung des ersten Getriebezuges hat die Folge, dass das erste Getriebeteil und das zweite Getriebeteil nicht mehr gleichlaufend sind, wenn sie gemeinsam durch die Antriebswelle angetrieben werden. Es tritt ein Versatz in ihrer Bewegung auf. Erstes und zweites Getriebeteil sind asynchron.

Ein an dem ersten Getriebeteil oder an dem zweiten Getriebeteil angeordnetes Verriegelungselement verändert bei einer Asynchronität von erstem und zweitem Getriebeteil derart seine Ausrichtung oder seine Position, dass es sich sowohl an der Getriebebasis als auch an dem ersten Getriebeteil abstützt und das erste Getriebeteil in Bezug auf die Getriebebasis arretiert. Dabei greift das Verriegelungselement nicht an der im Eingriff mit anderen Getriebeteilen des ersten Getriebezugs stehenden Oberfläche des ersten Getriebeteils an, sondern abseits dieser Oberfläche. Der Eingriff kann auch an einem zusätzlichen Bauteil erfolgen, das mit dem ersten Getriebeteil fest verbunden ist. Da der Eingriff des Verrieglungselements abseits der in Wirkeingriff mit anderen Getriebeteilen des ersten Getriebezuges stehenden Oberfläche erfolgt, kann ausgeschlossen werden, dass die Verriegelung durch die Beschädigung des ersten Getriebezuges beeinträchtigt wird, die die Asynchronität zwischen dem ersten und zweiten Getriebezug veranlasst hat.

Die Verriegelung des ersten Getriebezugs erfolgt damit in zuverlässiger Weise, ohne dass hierzu ein zweiter Antrieb oder eine Messtechnik erforderlich sind.

Vorteilhafterweise wird das erste Getriebeteil von der Antriebswelle entkoppelt, wenn das erste Getriebeteil verriegelt wird. Dadurch wird eine Beschädigung des Getriebes und gegebenenfalls eines mit der Antriebswelle verbundenen Motors verhindert.

Nach einer vorteilhaften Ausgestaltung der Erfindung ist der erste Getriebezug ein Schneckengetriebezug und das erste Getriebeteil ein Schneckenrad.

Nach einer weiteren vorteilhaften Ausgestaltung der Erfindung zweigt der zweite Getriebezug von dem ersten Getriebezug unmittelbar an der Antriebswelle ab. Dies ermöglicht eine Verriegelung des ersten Getriebezugs bei einer Beschädigung oder Beeinträchtigung jedes Getriebeteils des ersten Getriebezugs.

Nach einer weiteren vorteilhaften Ausgestaltung der Erfindung ist das erste Getriebeteil ein Abtriebszahnrad, welches verdrehsicher mit einer Verriegelungsscheibe verbunden ist. Die Verriegelungsscheibe ist durch die Antriebswelle zusammen mit dem Abtriebszahnrad zur Rotation um eine geometrische Abtriebszahnrad-Drehachse angetrieben. Die Verriegelungsscheibe weist mehrere Ausnehmungen für das Verriegelungselement auf.

Nach einer weiteren vorteilhaften Ausgestaltung der Erfindung weist die Verriegelungsscheibe mehrere radial nach außen abstehende, mit Hinterschneidungen ausgestattete Vorsprünge auf. Dabei sind die Ausnehmungen durch die Zwischenräume zwischen den Vorsprüngen gebildet.

Nach einer weiteren vorteilhaften Ausgestaltung der Erfindung sind die Ausnehmungen durch Durchgangsöffnungen in der Verriegelungsscheibe gebildet.

Nach einer weiteren vorteilhaften Ausgestaltung der Erfindung weist das zweite Getriebeteil einen Verriegelungsoszillator auf, welcher an der Getriebebasis beweglich angeordnet ist und durch den zweiten Getriebezug zu einer hin- und hergehenden Bewegung angetrieben ist. Der Verriegelungsoszillator bewegt sich zwischen zwei maximalen Auslenkungen hin und her.

Nach einer weiteren vorteilhaften Ausgestaltung der Erfindung sind an dem Verriegelungsoszillator mindestens zwei Verriegelungsstifte angeordnet, welche die Verriegelungselemente bilden. Bei einer synchronen Bewegung des ersten und zweiten Getriebezuges sind die Verrieglungsstifte abwechselnd lose in einer Ausnehmung der Verriegelungsscheibe angeordnet. Bei einer Asynchronität zwischen dem ersten und zweiten Getriebezug ist mindestens einer der beiden Verriegelungsstifte in einer Ausnehmung angeordnet und liegt derart an der Verriegelungsscheibe an, dass er die Verriegelungsscheibe blockiert.

Nach einer weiteren vorteilhaften Ausgestaltung der Erfindung ist der Verriegelungsoszillator um eine Oszillatordrehachse drehbar an der Getriebebasis angeordnet. Die hin- und hergehende Bewegung ist dabei eine Wippbewegung um die Ozillatordrehachse.

Nach einer weiteren vorteilhaften Ausgestaltung der Erfindung ist die Oszillatordrehachse parallel zu der Abtriebszahnrad-Drehachse.

Nach einer weiteren vorteilhaften Ausgestaltung der Erfindung ist die Oszillatordrehachse senkrecht zu der Abtriebszahnrad-Drehachse.

Nach einer weiteren vorteilhaften Ausgestaltung der Erfindung ist der Verriegelungsoszillator als zweiarmiger Verriegelungshebel ausgebildet, welcher um die Oszillatordrehachse drehbar ist. Dabei ist an jedem der beiden Arme des Verriegelungshebels ein Verriegelungsstift angeordnet.

Nach einer weiteren vorteilhaften Ausgestaltung der Erfindung ist der Verriegelungsoszillator entlang einer linearen Achse beweglich an der Getriebebasis angeordnet. In diesem Fall ist die hin- und hergehende Bewegung eine lineare Bewegung.

Nach einer weiteren vorteilhaften Ausgestaltung der Erfindung ist die lineare Achse parallel zu der Abtriebszahnrad-Drehachse.

Nach einer weiteren vorteilhaften Ausgestaltung der Erfindung ist die lineare Achse senkrecht zu der Abtriebszahnrad-Drehachse.

Nach einer weiteren vorteilhaften Ausgestaltung der Erfindung sind das erste Getriebeteil und das zweite Getriebeteil rotierende Getriebeteile. Sie weisen dieselbe geometrische Rotationsachse auf. Bei einer synchronen Bewegung des ersten und zweiten Getriebezuges befindet sich das Verriegelungselement in einer Öffnungsstellung, in welcher das erste Getriebeteil nicht an der Getriebebasis gehalten und verriegelt ist. Bei einer Asynchronität zwischen dem ersten und zweiten Getriebezug geht das Verriegelungselement in eine Verriegelungsstellung über, in welcher das erste Getriebeteil verriegelt ist.

Nach einer weiteren vorteilhaften Ausgestaltung der Erfindung umfasst das Verriegelungselement einen Verriegelungsbolzen, der parallel oder orthogonal zu der gemeinsamen Rotationsachse des ersten und zweiten Getriebeteils unter Vorspannung verschiebbar an dem ersten oder zweiten Getriebeteil angeordnet ist. Um die Vorspannung aufzubauen, kann der Verriegelungsbolzen federbeaufschlagt sein. Hierzu kann eine Schraubenfeder, Druckluft oder ein sonstiges elastisches Element dienen. In der Öffnungsstellung ist der Verriegelungsbolzen durch einen voreingestellten Versatz zwischen dem ersten und zweiten Getriebeteil gehalten. Solange dieser voreingestellte Versatz aufgrund des Gleichlaufs von erstem und zweitem Getriebeteil erhalten bleibt, verharrt der Verriegelungsbolzen in seiner Öffnungsstellung. Bei einer Asynchronität zwischen erstem und zweitem Getriebezug wird der Versatz zwischen dem ersten und zweiten Getriebeteil ausgeglichen. Dabei wird der Verriegelungsbolzen aus seiner Öffnungsstellung freigesetzt, so dass er sich aufgrund seiner Vorspannung in die Verriegelungsstellung bewegt.

Nach einer weiteren vorteilhaften Ausgestaltung der Erfindung weisen das erste Getriebeteil und das zweite Getriebeteil jeweils einen der Führung des Verriegelungsbolzens dienenden Kanalabschnitt auf. Solange der erste Getriebezug und der zweite Getriebezug synchron sind, sind der Kanalabschnitt des ersten Getriebeteils und der Kanalabschnitt des zweiten Getriebeteils versetzt zueinander. Anstelle eines Kanalabschnitts kann der zweite Getriebeteil eine Durchgangsöffnung für den Verriegelungsbolzen aufweisen. Bei einer Asynchronität der beiden Getriebezüge bewegen sich die beiden Kanalabschnitte oder der Kanalabschnitt und die Durchgangsöffnung relativ zueinander, so dass das Verriegelungsbolzen nicht mehr in der Öffnungsstellung gehalten ist.

Nach einer weiteren vorteilhaften Ausgestaltung der Erfindung ist an dem ersten Getriebeteil mindestens eine Sperrklinke angeordnet. Diese kann durch den Verriegelungsbolzen ausgelöst werden.

Nach einer weiteren vorteilhaften Ausgestaltung der Erfindung greift die Sperrklinke in der Verriegelungsstellung an einem Verriegelungsprofil an, welches an der Getriebebasis angeordnet ist.

Nach einer weiteren vorteilhaften Ausgestaltung der Erfindung ist an der Getriebebasis eine Lochscheibe mit mehreren Durchgangsöffnungen oder Sacklöchern angeordnet, in die der Verriegelungsbolzen in der Verriegelungsstellung zumindest teilweise eintaucht. Dadurch wird das erste Getriebeteil an der Getriebebasis arretiert.

Nach einer weiteren vorteilhaften Ausgestaltung der Erfindung ist das Getriebe an einem Treppenlift angeordnet. Das Getriebe ist dabei Teil eines Nivellierungsantriebs für eine Plattform des Treppenlifts. Das Getriebe sorgt dafür, dass die Ausrichtung der Plattform auch dann erhalten bleibt, wenn das Getriebe beschädigt oder beeinträchtigt ist.

Das erfindungsgemäße Verfahren zeichnet sich dadurch aus, dass bei dem Getriebe im Falle einer Asynchronität zwischen dem ersten und zweiten Getriebezug das an dem ersten oder zweiten Getriebeteil angeordnete Verriegelungselement derart ausgelöst wird, dass es sich sowohl an dem ersten Getriebeteil als auch an der Getriebebasis abstützt, so dass das erste Getriebeteil arretiert ist.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung sind mehrere Ausführungsbeispiele des erfindungsgemäßen Getriebes dargestellt. Es zeigen:
- Figur 1: erstes Ausführungsbeispiel eines Getriebes in perspektivischer Ansicht,
- Figur 2: Getriebe gemäß Figur 1 in einer weiteren perspektivischen Ansicht,
- Figur 3: Getriebe gemäß Figur 1 in einer weiteren perspektivischen Ansicht,
- Figur 4: Teil des Getriebes gemäß Figur 1 in einer perspektivischen Ansicht von oben,
- Figur 5: Getriebe gemäß Figur 1 in einer Seitenansicht,
- Figur 6: zweites Ausführungsbeispiel eines Getriebes in perspektivischer Ansicht,
- Figur 7: Getriebe gemäß Figur 6 in einer weiteren perspektivischen Ansicht,
- Figur 8: Getriebe gemäß Figur 6 in einer weiteren perspektivischen Ansicht,
- Figur 9: Getriebe gemäß Figur 6 in einer Seitenansicht,
- Figur 10: Getriebe gemäß Figur 6 in einer weiteren Seitenansicht,
- Figur 11: Schnitt durch das Getriebe gemäß Figur 6 entlang der in Figur 10 mit C - C gekennzeichneten Ebene,
- Figur 12: Sperrklinken des Getriebes gemäß Figur 6,
- Figur 13: drittes Ausführungsbeispiel eines Getriebes in perspektivischer Ansicht,
- Figur 14: Getriebe gemäß Figur 13 in einer weiteren perspektivischen Ansicht,
- Figur 15: Getriebe gemäß Figur 13 in einer weiteren perspektivischen Ansicht,
- Figur 16: Verriegelungsbolzen des Getriebes gemäß Figur 13
- Figur 17: viertes Ausführungsbeispiel eines Getriebes in perspektivischer Ansicht,
- Figur 18: Getriebe gemäß Figur 17 in einer weiteren perspektivischen Ansicht.

### Beschreibung der Ausführungsbeispiele

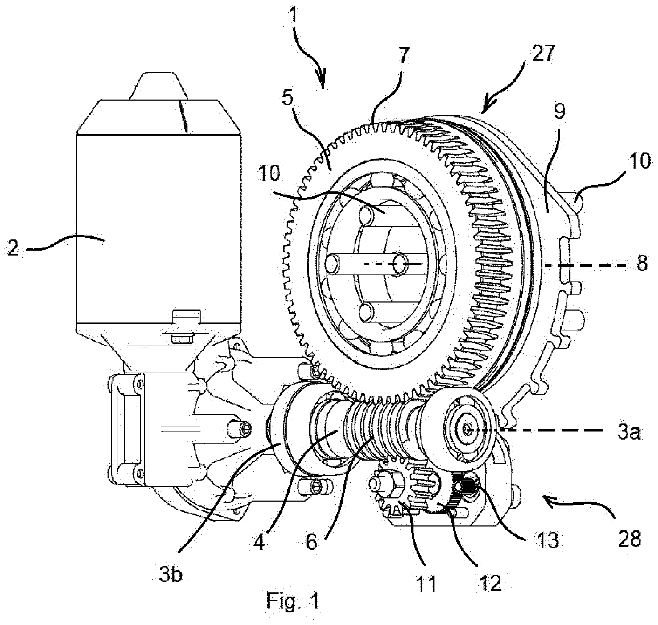

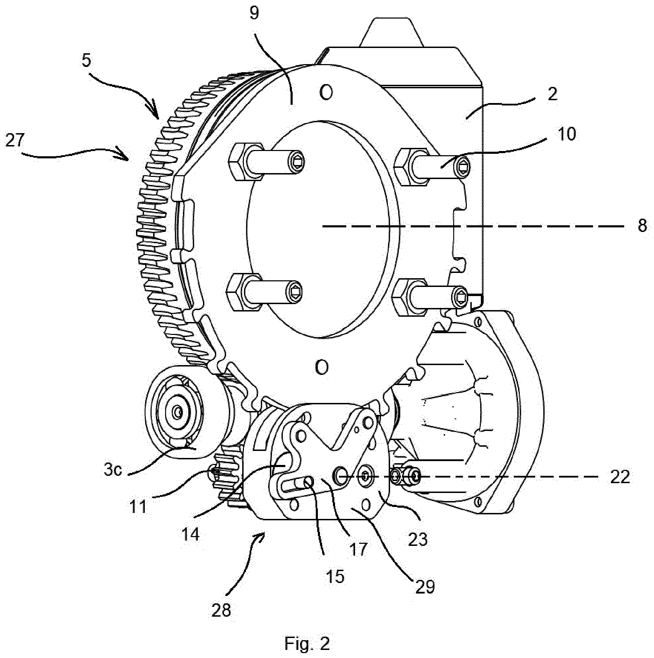

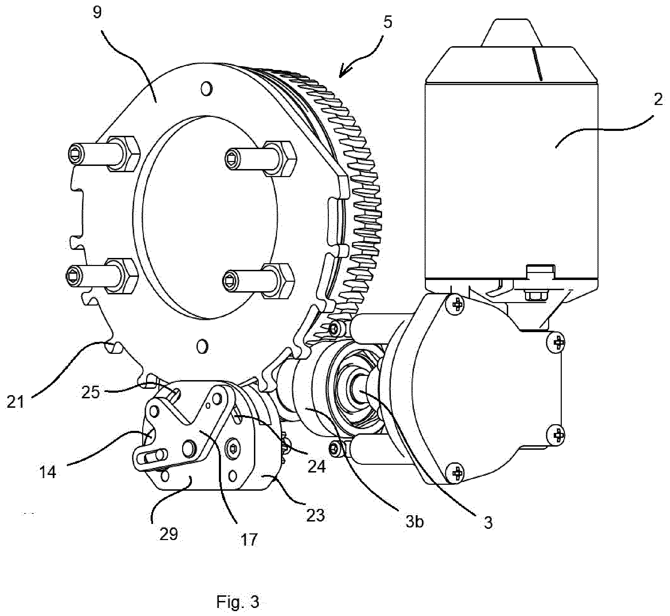

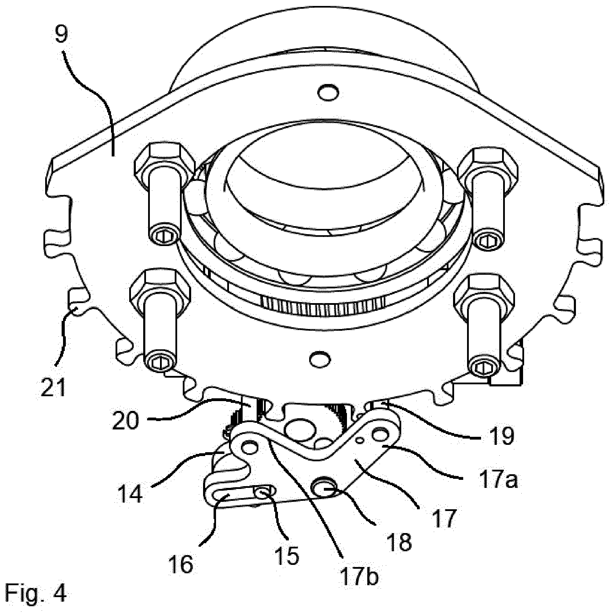

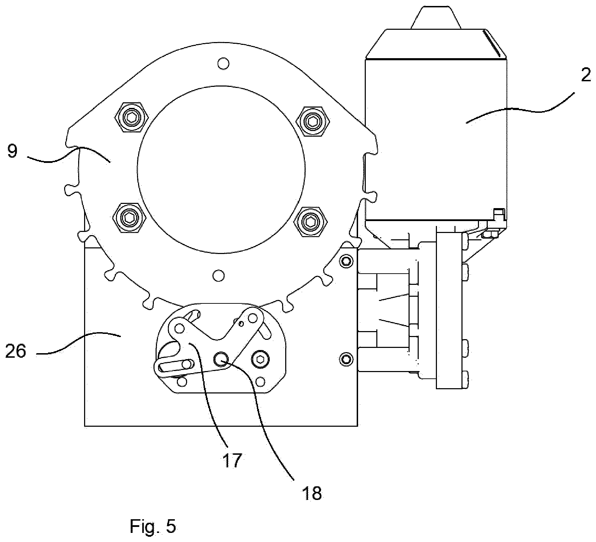

In den Figuren 1 bis 5 ist ein erstes Ausführungsbeispiel eines Getriebes 1 in verschiedenen Ansichten dargestellt. Eine Antriebswelle 3 des Getriebes 1 ist mit einem Motor 2 verbunden. Dieser überträgt ein Drehmoment auf die Antriebswelle 3 und treibt die Antriebswelle 3 um ihre geometrische Rotationsachse 3a zur Rotation an. Die Antriebswelle 3 ist einem Lager 3b drehbar gelagert. An der Antriebswelle 3 ist eine Schnecke 4 angeordnet. Die Schnecke 4 ist einem Lager 3c drehbar gelagert. Ein Schneckenrad 5 steht in Wirkeingriff mit der Schnecke 4. Hierzu kämmt das Schneckenrad 5 mit seiner Verzahnung 7 in der Verzahnung 6 der Schnecke 4. Dabei wird das Schneckenrad 5 zu einer Rotation um die geometrische Rotationsachse 8 angetrieben. Mit dem Schneckenrad 5 ist eine in der Zeichnung nicht dargestellte Abtriebswelle verbunden. Ein erster Getriebezug 27 umfasst die Schnecke 4 und das Schneckenrad 6.

Darüber hinaus steht mit der Schnecke 4 ein weiteres Schneckenrad 11 in Wirkeingriff. Dieses wiederum ist mit einem ersten Zahnrad 12 verbunden, das in Wirkeingriff mit einem zweiten Zahnrad 13 steht. Dieses zweite Zahnrad 13 ist mit einer Exzenterscheibe 14 verbunden, an welcher exzentrisch ein Exzenterstift 15 angeordnet ist. Der Exzenterstift 15 ist in einem Langloch 16 eines Verriegelungsoszillators 17 geführt, der als zweiarmiger Hebel mit einem ersten Hebelarm 17a und einem zweiten Hebelarm 17b ausgebildet ist. Der Verriegelungsoszillator 17 ist um eine Oszillatorachse 18 drehbar an einer Kulissenführung 29 angeordnet. Die Kulissenführung ist an einer Getriebebasis 26 des Getriebes 1 angeordnet. An dem ersten Hebelarm 17a ist ein erster Verriegelungsstift 19 angeordnet. An dem zweiten Hebelarm 17b ist ein zweiter Verriegelungsstift 20 angeordnet. In der Kulissenführung 29 sind Langlöcher für die Verrieglungsstifte 19, 20 vorgesehen. Die Schnecke 4, das Schneckenrad 11, das erste Zahnrad 12, das zweite Zahnrad 13, die Exzenterscheibe 14 mit Exzenterstift 15 und der Verriegelungsoszillator 17 mit den beiden Verriegelungsstiften 19, 20 bilden einen zweiten Getriebezug 28.

An dem Schneckenrad 5 ist verdrehsicher über Gewindebolzen 10 eine Verriegelungsscheibe 9 angeordnet, welche sich zusammen mit dem Schneckenrad 5 um die Rotationsachse 8 dreht. Die Verriegelungsscheibe weist mehrere radial nach außen überstehende Vorsprünge 21 mit Hinterschneidungen auf.

Der Schneckenrad 5 stellt ein erstes Getriebeteil des ersten Getriebezuges 27 dar. Der Verriegelungsoszillator 17 stellt ein zweites Getriebeteil des zweiten Getriebezuges 28 dar. Da die beiden Getriebezüge 27, 28 über die Antriebswelle 3 durch den Motor 2 angetrieben werden, sind der erste Getriebezug 27 und der zweite Getriebezug 28 synchronisiert. Dies hat zur Folge, dass das Schneckenrad 5 als erstes Getriebeteil und der Verriegelungsoszillator 17 als zweites Getriebeteil gleichlaufend sind. Der Verriegelungsoszillator wird von dem zweiten Getriebezug zu einer hin- und hergehenden Wippbewegung um die Oszillatorachse 18 angetrieben. Dabei bewegen sich die Verriegelungsstifte 19, 20 relativ zu der Kulissenführung 29, welche an der Getriebebasis angeordnet ist. Die in der Kulissenführung 29 für die Verriegelungsstifte 19, 20 vorgesehenen Langlöcher ermöglichen den Verriegelungsstiften 19, 20 die Wippbewegung. Die Verriegelungsscheibe 9 wird zusammen mit dem Schneckenrad 5 zu einer Rotation um die Rotationsachse 8 angetrieben. Dabei liegen die beiden Verriegelungsstifte 19, 20 des Verriegelungsoszillators 17 abwechselnd lose in einem der Zwischenräume zwischen je zwei Vorsprüngen 21 der Verriegelungsscheibe 9.

Ist das Schneckenrad 5 beschädigt, beispielsweise aufgrund eines Zahnbruchs oder aufgrund von Abnutzung, so sind der erste Getriebezug 27 und der zweite Getriebezug 28 nicht mehr synchron. Es liegt eine Asynchronität vor. Dies hat zur Folge, dass mindestens einer der beiden Verriegelungsstifte 19, 20 die Verriegelungsscheibe an einem der Vorsprünge berührt. Die Vorsprünge 21 weisen eine Hinterschneidung auf, so dass der Verriegelungsstift 19, 20 an der Verriegelungsscheibe gefangen ist und den Zwischenraum zwischen den beiden Vorsprüngen nicht mehr verlassen kann. Der Verriegelungsstift 19, 20 stützt sich in diesem Fall an der Kulissenführung 29 ab, welche an der Getriebebasis angeordnet ist. Darüber hinaus stützt sich der Verriegelungsstift 19, 20 über die Verriegelungsscheibe 9 an dem Schneckenrad 5 des ersten Getriebezuges 27 ab. Dadurch wird das als erstes Getriebeteil ausgebildete Schneckenrad 5 des ersten Getriebezuges relativ zu der Getriebebasis 26 arretiert und blockiert. Die beiden Verriegelungsstifte 19, 20 stützen sich zur Arretierung des als Schneckenrad ausgebildeten ersten Getriebeteils nicht an der Verzahnung 7 des Schneckenrades 5 ab, sondern an der Verriegelungsscheibe 9, welche mit dem Schneckenrad 5 fest verbunden ist. Die Verriegelung wird daher nicht durch eine eventuelle Beschädigung des Schneckenrades 5 beeinträchtigt.

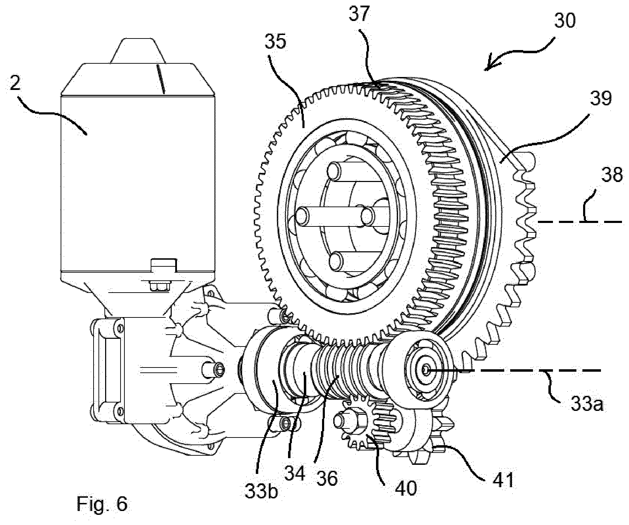

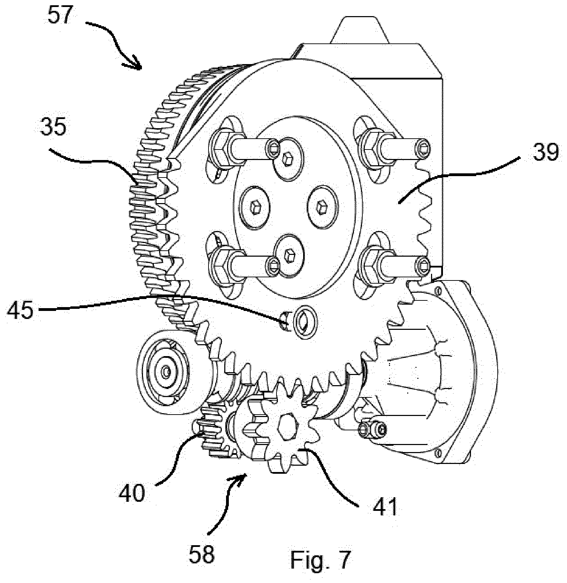

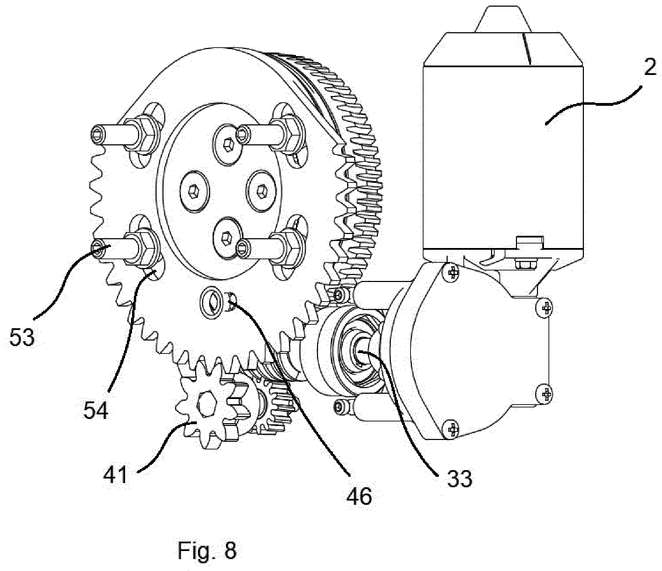

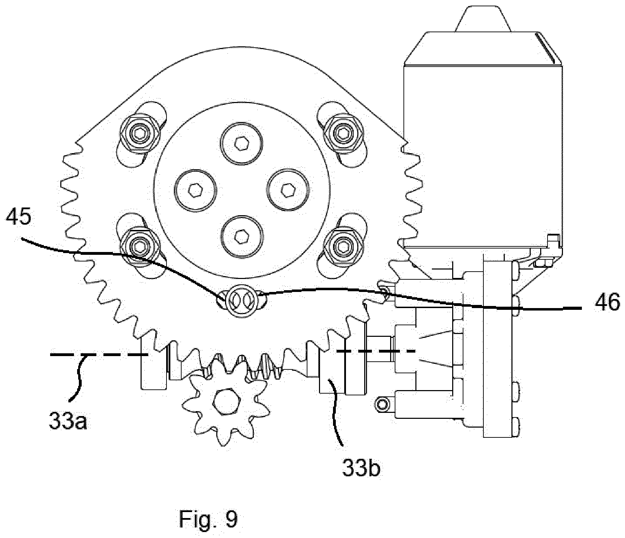

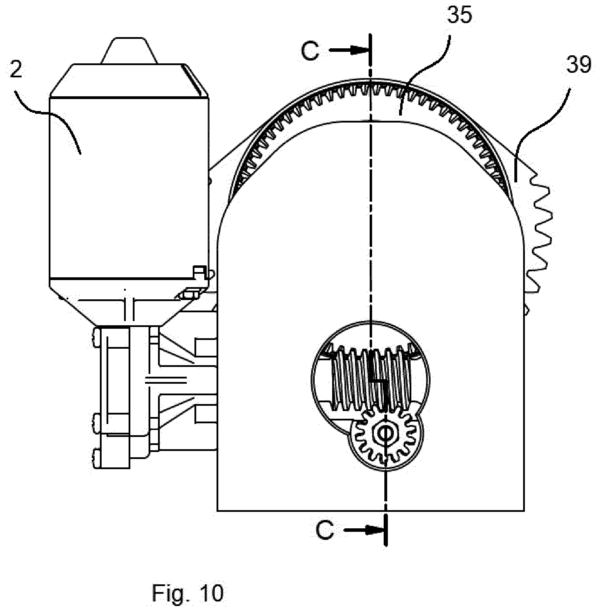

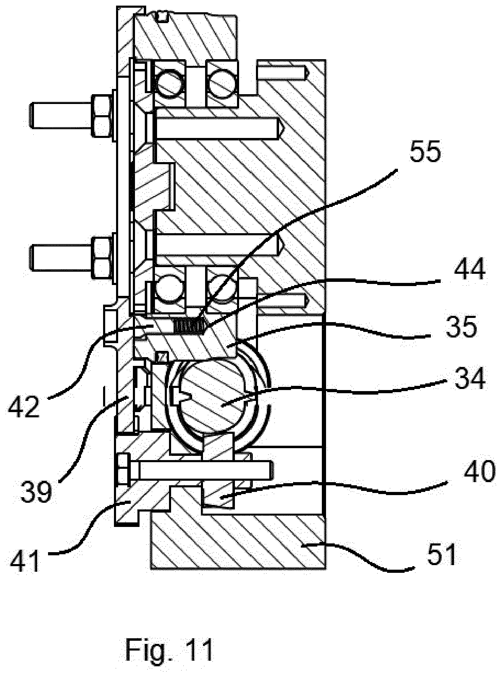

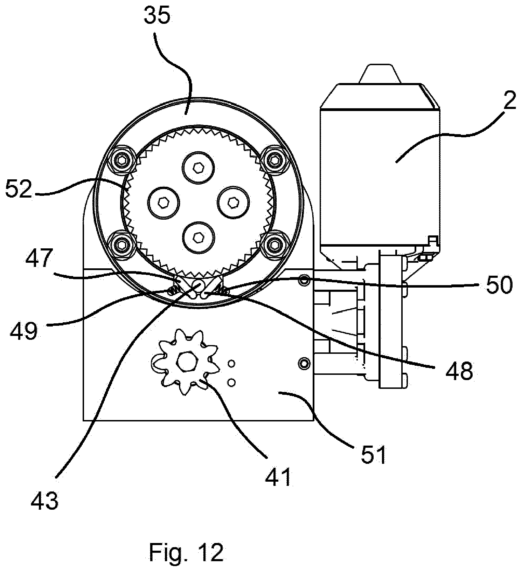

In den Figuren 6 bis 12 ist ein zweites Ausführungsbeispiel eines Getriebes 30 dargestellt, dessen Antriebswelle 33 mit einem Motor 2 verbunden ist. Die Antriebswelle 33 ist um eine geometrische Rotationsachse 33a drehbar angeordnet und durch den Motor 2 um die geometrische Rotationsachse 33a zur Rotation angetrieben. Die Antriebswelle 33 ist in einem Lager 33b drehbar an einer Getriebebasis 51 gelagert. In Übereinstimmung mit dem ersten Ausführungsbeispiel weist das Getriebe 30 einen ersten Getriebezug 57 auf, welcher eine Schnecke 34 und ein Schneckenrad 35 umfasst. Die Schnecke 34 ist mit der Antriebswelle 33 verbunden. Das Schneckenrad 35 kämmt mit seiner Verzahnung 37 in der Verzahnung 36 der Schnecke 34. Das Schneckenrad dreht sich um eine geometrische Rotationsachse 38. Ein Unterschied zu dem ersten Ausführungsbeispiel besteht in dem zweiten Getriebezug 58. Dieser weist ein zweites Schneckenrad 40, ein mit diesem verbundenes erstes Zahnrad 41 und ein mit diesem in Wirkeingriff stehendes zweites Zahnrad 39 auf.

Das Schneckenrad 35 bildet dabei ein erstes Getriebeteil des ersten Getriebezuges 57. Das zweite Zahnrad 39 bildet ein zweites Getriebeteil des zweiten Getriebezuges 58. Sind erster und zweiter Getriebezug synchron, so sind das Schneckenrad 35 und das zweite Zahnrad 39 gleichlaufend und drehen sich um die übereinstimmende geometrische Rotationsachse 38 mit derselben Drehgeschwindigkeit.

In einem ersten Kanalabschnitt 44 des Schneckenrades 35 und in einem zweiten Kanalabschnitt des zweiten Zahnrades 39 ist ein Verriegelungsbolzen 42 in einer Öffnungsstellung gehalten, solange das Schneckenrad 35 und das zweite Zahnrad 39 gleichlaufend sind. Der Verriegelungsbolzen 42 ist durch eine Feder 43 vorgespannt. Im Falle einer Asynchronität zwischen dem ersten und zweiten Getriebezug 57, 58 drehen sich das Schneckenrad 35 und das zweite Zahnrad 39 relativ zueinander. Dadurch wird eine der beiden Durchgangsöffnungen 45, 46 des zweiten Zahnrades 39 mit dem ersten Kanalabschnitt 44 des Schneckenrades 35 zur Deckung gebracht, so dass sich der Verriegelungsbolzen 42 in dem ersten Kanalabschnitt 44 verschiebt und in eine Verriegelungsstellung übergeht.

Der Verriegelungsbolzen 42 weist einen Schaft und einen Kopf 43 auf. Dabei ist der Durchmesser des Schaftes kleiner als der Durchmesser des Kopfes 43. In der Öffnungsstellung drückt der Kopf 43 des Verriegelungsbolzens 42 zwei Sperrklinken 47, 48 nach außen, die über Federn 49, 50 in dem Schneckenrad 35 gelagert sind. Die Sperrklinken 47, 48 weisen daher einen Abstand zu einem Verriegelungsprofil 52 an der Getriebebasis 51 auf. In der Verriegelungsstellung ist der Kopf des Verriegelungsschaftes nach außen geschoben. Die Sperrklinken 47, 48 liegen nun nicht mehr an dem Kopf 43 an, sondern an dem Verriegelungsprofil 52 der Getriebebasis 51. Dadurch stützt sich die Kombination aus Verriegelungsbolzen 42 und Sperrklinken 47, 48 an der Getriebebasis 51 und an dem als Schneckenrad 35 ausgebildeten ersten Getriebeteil ab. Dies hat zur Folge, dass das erste Getriebeteil an der Getriebebasis 51 arretiert wird.

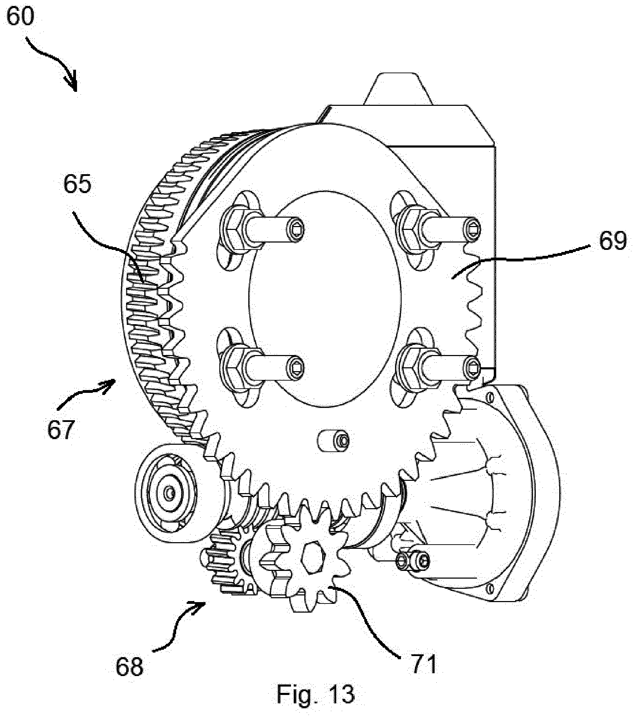

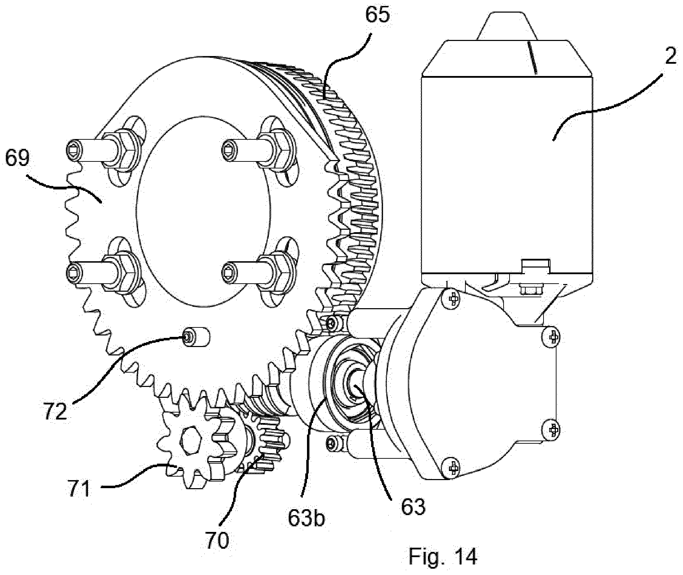

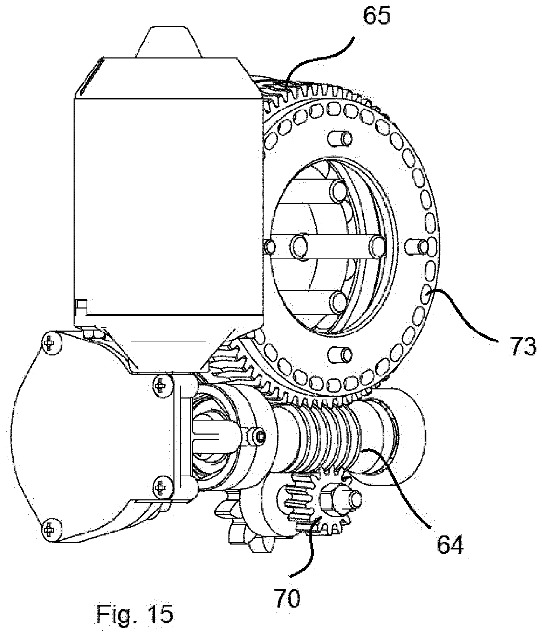

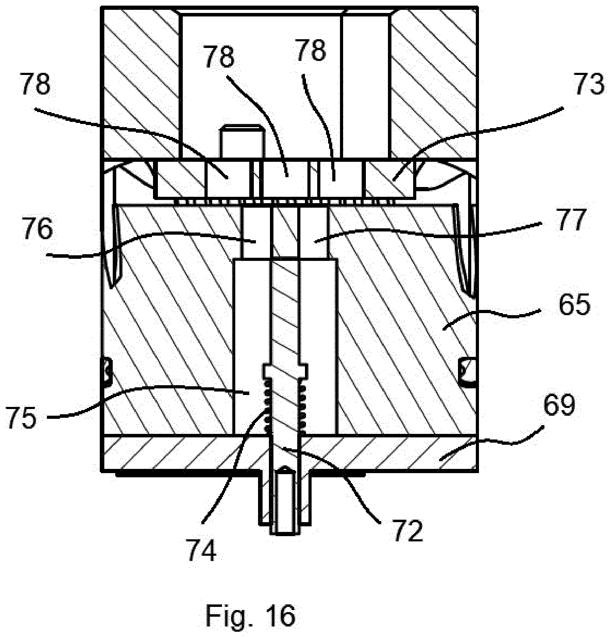

In den Figuren 13 bis 16 ist ein drittes Ausführungsbeispiel eines Getriebes 60 mit einer Antriebswelle 63 dargestellt. Die Antriebswelle 63 ist in einem Lager 63b an einer Getriebebasis um eine geometrische Rotationsachse drehbar angeordnet. Wie bei dem zweiten Ausführungsbeispiel umfasst der erste Getriebezug 67 eine Schnecke 64 und ein als Schneckenrad 65 ausgebildetes erstes Getriebeteil. Ferner umfasst der zweite Getriebezug 68 in Überstimmung zum zweiten Ausführungsbeispiel ein Schneckenrad 70, ein erstes Zahnrad 71 und ein als zweites Zahnrad 69 ausgebildetes zweites Getriebeteil, das gleichlaufend mit dem ersten Getriebeteil um eine gemeinsame geometrische Rotationsachse rotiert. Zum Verriegeln des als Schneckenrad 65 ausgebildeten ersten Getriebeteils ist wie beim zweiten Ausführungsbeispiel ein Verriegelungsbolzen 72 vorgesehen, der in einer Ausnehmung 75 des Schneckenrades 65 und in einer Ausnehmung des zweiten Zahnrades 69 in einer Öffnungsstellung gehalten ist, so lange der erste Getriebezug 67 und der zweite Getriebezug 68 synchron sind. Der Verriegelungsbolzen 72 ist unter Vorspannung gehalten. Hierzu ist eine Feder 74 vorgesehen. Wenn sich das Schneckenrad 65 und das zweite Zahnrad 69 aufgrund einer Asynchronität relativ zueinander drehen, bewegt sich der durch das zweite Zahnrad 69 geführte Verriegelungsbolzen in der Ausnehmung 75 zu einer der beiden Durchgangsöffnungen 76, 77 in dem Schneckenrad 65. Dadurch kann sich der Verriegelungsbolzen 72 nach außen schieben. Dadurch gelangt er in Eingriff mit einem Langloch 78 der Lochscheibe 73, welche an einer Getriebebasis angeordnet ist. Dabei stützt sich der Verriegelungsbolzen 72 an dem als Schneckenrad 65 ausgebildeten ersten Getriebeteil und über die Lochscheibe 73 an der Getriebebasis ab. Das Schneckenrad 65 wird verriegelt.

Die ersten drei Ausführungsbeispiele stimmen darin überein, dass die mit der Antriebswelle verbundene Schnecke Bestandteil des ersten Getriebezugs und des zweiten Getriebezugs ist. Die Verzweigung erfolgt damit erst nach der Schnecke.

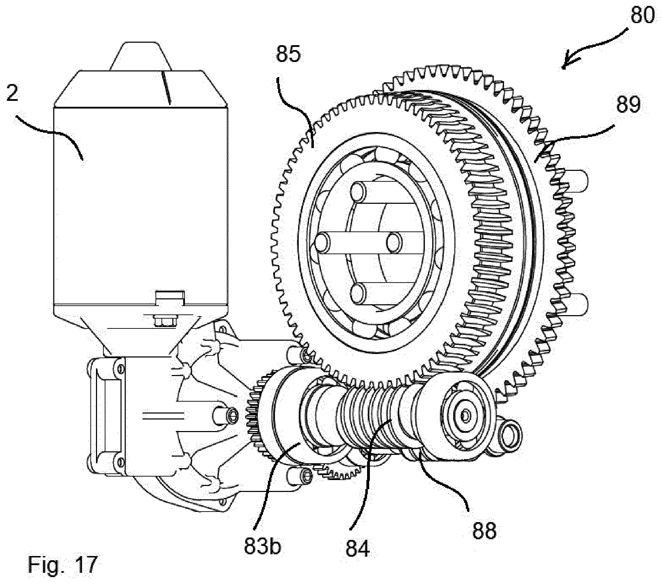

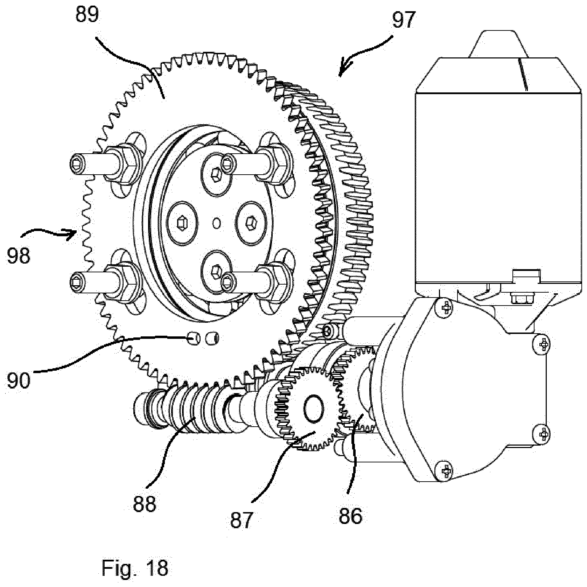

Im Unterschied dazu liegt bei dem vierten Ausführungsbeispiel eines Getriebes 80, welches in den Figuren 17 und 18 dargestellt ist, die Verzweigung zwischen dem ersten und zweiten Getriebezug unmittelbar nach der Antriebswelle, welche in einem Lager 83b drehbar an einer Getriebebasis aufgenommen ist. Der erste Getriebezug 97 umfasst eine erste Schnecke 84 und ein erstes Schneckenrad 85. Der zweite Getriebezug 98 umfasst eine zweite Schnecke 88, welche über ein erstes Zahnrad 86 und ein zweites Zahnrad 87 mit der Antriebswelle verbunden ist, sowie ein zweites Schneckenrad 89. Die Verriegelung im Falle einer Asynchronität zwischen dem ersten und zweiten Getriebezug 97, 98 erfolgt über einen Verriegelungsbolzen 90, der entweder wie bei dem zweiten Ausführungsbeispiel mit Sperrklinken zusammenwirkt oder wie beim dritten Ausführungsbeispiel mit einer Lochscheibe in den Figuren 17 und 18 sind weder die Sperrklinken noch die Lochscheibe dargestellt. Hierzu wird auf die Figuren 6 bis 16 zu dem zweiten und dritten Ausführungsbeispiel verwiesen.

### Bezugszahlen

- 1: Getriebe
- 2: Motor
- 3: Antriebswelle
- 3a: Rotationsachse der Antriebswelle
- 3b: Lager der Antriebswelle
- 3c: Lager der Schnecke
- 4: Schnecke
- 5: Erstes Getriebeteil/ Schneckenrad
- 6: Verzahnung der Schnecke
- 7: Verzahnung des ersten Getriebeteils
- 8: Rotationsachse der Abtriebswelle
- 9: Verriegelungsscheibe
- 10: Gewindebolzen
- 11: Schneckenrad
- 12: Erstes Zahnrad
- 13: Zweites Zahnrad
- 14: Exzenterscheibe
- 15: Exzenterstift
- 16: Langloch
- 17: Zweites Getriebeteil/ Verriegelungsoszillator
- 17a: Erster Hebelarm
- 17b: Zweiter Hebelarm
- 18: Oszialltorachse
- 19: Verriegelungsstift
- 20: Verriegelungsstift
- 21: Vorsprung der Verriegelungsscheibe
- 22: Oszillatordrehachse
- 23: Oszillatoraufnahme
- 24: Langloch
- 25: Langloch
- 26: Getriebebasis
- 27: Erster Getriebezug
- 28: Zweiter Getriebezug
- 29: Kulissenführung
- 30: Getriebe
- 31 32 33: Antriebswelle
- 33a: Rotationsachse der Antriebswelle
- 33b: Lager der Antriebswelle
- 34: Schnecke
- 35: Erstes Getriebeteil/ Schneckenrad
- 36: Verzahnung der Schnecke
- 37: Verzahnung des ersten Getriebeteils
- 38: Rotationsachse der Abtriebswelle
- 39: Zweites Getriebeteil/ Zahnrad
- 40: Schneckenrad
- 41: Zahnrad
- 42: Verriegelungsbolzen
- 43: Kopf des Verriegelungsstiftes
- 44: Erster Kanalabschnitt in dem ersten Getriebeteil
- 45: Zweiter Kanalabschnitt in dem zweiten Getriebeteil
- 46: Zweiter Kanalabschnitt in dem zweiten Getriebeteil
- 47: Sperrklinke
- 48: Sperrklinke
- 49: Feder
- 50: Feder
- 51: Getriebebasis
- 52: Verriegelungsprofil der Getriebebasis
- 53: Gewindebolzen
- 54: Langloch
- 55: Feder
- 56 57: Erster Getriebezug
- 58: Zweiter Getriebezug
- 59 60: Getriebe
- 61 62 63: Antriebswelle
- 63b: Lager der Antriebswelle
- 64: Schnecke
- 65: Erstes Getriebeteil/ Schneckenrad
- 66 67: Erster Getriebezug
- 68: Zweiter Getriebezug
- 69: Zweites Getriebeteil
- 70: Schneckenrad
- 71: Zahnrad
- 72: Verriegelungsbolzen
- 73: Lochscheibe
- 74: Feder
- 75: Erster Kanalabschnitt
- 76: Zweiter Kanalabschnitt
- 77: Zweiter Kanalabschnitt
- 78: Langloch
- 79 80: Getriebe
- 81 82 83 83b: Lager der Antriebswelle
- 84: Erste Schnecke
- 85: Erstes Getriebeteil/ Schneckenrad

- 86: Erstes Zahnrad
- 87: Zweites Zahnrad
- 88: Zweite Schnecke
- 89: Zweites Getriebeteil
- 90: Verriegelungsbolzen
- 91 92 93 94 95 96 97: Erster Getriebezug
- 98: Zweiter Getriebezug

## Patentansprüche

1. Getriebe (1, 30, 60, 80)
mit einer Getriebebasis (26, 51),
mit einer Antriebswelle (3, 33, 63), welche mit einem Motor (2) verbindbar ist,
mit einer Abtriebswelle, welche mit einer Maschine oder einem anzutreibenden Bauteil verbindbar ist,
mit einem ersten Getriebezug (27, 57, 67, 97), welcher mit der Antriebswelle (3, 33, 63) wirkverbunden ist,
mit einem zweiten Getriebezug (28, 58, 68, 98), welcher ebenfalls mit der Antriebswelle (3, 33, 63) wirkverbunden ist, und dadurch mit dem ersten Getriebezug (27, 57, 67, 97) synchronisiert ist,
mit einem im ersten Getriebezug (27, 57, 67, 97) enthaltenen ersten Getriebeteil (5, 35, 65, 85),
mit einem im zweiten Getriebezug (28, 58, 68, 98) enthaltenen zweiten Getriebeteil (17, 39, 69, 89), welches bei einem beschädigungsfreien ersten Getriebezug (27, 57, 67, 97), mit dem ersten Getriebeteil (5, 35, 65, 85) gleichlaufend ist,
mit einem an dem ersten Getriebeteil (5, 35, 65, 85) oder an dem zweiten Getriebeteil (17, 39, 69, 89) angeordneten Verriegelungselement (19, 20, 42, 47, 48, 72, 90),
**dadurch gekennzeichnet,**
**dass** nur der erste Getriebezug (27, 57, 67, 97) mit der Abtriebswelle wirkverbunden ist, und
**dass** sich das Verriegelungselement (19, 20, 42, 47, 48, 72, 90) bei einer durch Beschädigung des ersten Getriebezuges (27, 57, 67, 97) verursachten Asynchronität des ersten Getriebezugs (27, 57, 67, 97) relativ zu dem zweiten Getriebezug (28, 58, 68, 98) an der Getriebebasis (26, 51) und an dem ersten Getriebeteil (5, 35, 65, 85) außerhalb der mit anderen Getriebeteilen in Eingriff stehenden Oberfläche abstützt und das erste Getriebeteil (5, 35, 65, 85) relativ zu der Getriebebasis (26, 51) arretiert.

2. Getriebe nach Anspruch 1, **dadurch gekennzeichnet, dass** das erste Getriebeteil (5) ein Abtriebszahnrad ist, welches verdrehsicher mit einer Verriegelungsscheibe (9) verbunden ist und durch die Antriebswelle (3) zusammen mit dem Abtriebszahnrad zur Rotation um eine geometrische Abtriebszahnrad-Drehachse (8) angetrieben ist, und dass die Verriegelungsscheibe (9) mehrere Ausnehmungen aufweist.

3. Getriebe nach Anspruch 2, **dadurch gekennzeichnet, dass** die Verriegelungsscheibe (9) mehrere radial nach außen abstehende, mit Hinterschneidungen ausgestattete Vorsprünge (21) aufweist, und dass die Ausnehmungen durch die Zwischenräume zwischen den Vorsprüngen (21) gebildet sind.

4. Getriebe nach Anspruch 3, **dadurch gekennzeichnet, dass** die Ausnehmungen durch Durchgangsöffnungen in der Verriegelungsscheibe (9) gebildet sind.

5. Getriebe nach einem der Ansprüche 2 bis 4, **dadurch gekennzeichnet, dass** das zweite Getriebeteil (17) einen Verriegelungsoszillator aufweist, welcher an der Getriebebasis (26) beweglich angeordnet ist und durch den zweiten Getriebezug (28) zu einer hin- und hergehenden Bewegung angetrieben ist.

6. Getriebe nach Anspruch 5, **dadurch gekennzeichnet, dass** an dem Verriegelungsoszillator (17) mindestens zwei Verriegelungsstifte (19, 20) angeordnet sind, welche die Verriegelungselemente bilden, und dass die Verrieglungsstifte (19, 20) bei einer synchronen Bewegung des ersten und zweiten Getriebezuges (27, 28) abwechselnd lose in einer Ausnehmung der Verriegelungsscheibe (9) angeordnet sind, und dass bei einer Asynchronität zwischen dem ersten und zweiten Getriebezug (27, 28) mindestens einer der beiden Verriegelungsstifte (19, 20) in einer Ausnehmung angeordnet ist und an der Verriegelungsscheibe (9) derart anliegt, dass er die Verriegelungsscheibe (9) blockiert.

7. Getriebe nach Anspruch 5 oder 6, **dadurch gekennzeichnet, dass** der Verriegelungsoszillator (17) um eine Oszillatordrehachse (22) drehbar an der Getriebebasis (21) angeordnet ist und die hin- und hergehende Bewegung eine Wippbewegung um die Ozillatordrehachse (22) ist.

8. Getriebe nach Anspruch 7, **dadurch gekennzeichnet, dass** die Oszillatordrehachse (22) parallel zu der Abtriebszahnrad-Drehachse (8) ist.

9. Getriebe nach Anspruch 7, **dadurch gekennzeichnet, dass** die Oszillatordrehachse (22) senkrecht zu der Abtriebszahnrad-Drehachse ist.

10. Getriebe nach einem der Ansprüche 7 bis 9, **dadurch gekennzeichnet, dass** der Verriegelungsoszillator (17) als zweiarmiger Verriegelungshebel ausgebildet ist, und dass an jedem der beiden Arme (17a, 17b) des Verriegelungshebels ein Verriegelungsstift (19, 20) angeordnet ist.

11. Getriebe nach Anspruch 5 oder 6, **dadurch gekennzeichnet, dass** der Verriegelungsoszillator (17) entlang einer linearen Achse beweglich an der Getriebebasis (21) angeordnet ist und die hin- und hergehende Bewegung eine lineare Bewegung ist.

12. Getriebe nach Anspruch 11, **dadurch gekennzeichnet, dass** die lineare Achse parallel zu der Abtriebszahnrad-Drehachse (8) ist.

13. Getriebe nach Anspruch 7, **dadurch gekennzeichnet, dass** die lineare Achse senkrecht zu der Abtriebszahnrad-Drehachse ist.

14. Getriebe nach Anspruch 1, **dadurch gekennzeichnet, dass** das erste Getriebeteil (35, 65, 85) und das zweite Getriebeteil (39, 69, 89) rotierende Getriebeteile sind und dieselbe geometrische Rotationsachse (38) aufweisen, dass bei einer synchronen Bewegung des ersten und zweiten Getriebezuges (57, 58, 67, 68, 97, 98) das Verriegelungselement (42, 47, 48, 72, 90) eine Öffnungsstellung aufweist, und dass das Verriegelungselement (42, 47, 48, 72, 90) bei einer Asynchronität zwischen dem ersten und zweiten Getriebezug (57, 58, 67, 68, 97, 98) eine Verriegelungsstellung aufweist, in welcher das erste Getriebeteil (35, 65, 85) verriegelt ist.

15. Getriebe nach Anspruch 14, **dadurch gekennzeichnet, dass** das Verriegelungselement einen Verriegelungsbolzen (42, 72, 90) umfasst, der parallel oder orthogonal zu der Rotationsachse (38) des ersten und zweiten Getriebeteils (35, 39, 65, 69, 85, 89) unter Vorspannung verschiebbar an dem ersten oder zweiten Getriebeteil (35, 39, 65, 69, 85, 89) angeordnet ist, dass der Verriegelungsbolzen (42, 72, 90) in der Öffnungsstellung durch einen voreingestellten Versatz zwischen dem ersten und zweiten Getriebeteil (35, 39, 65, 69, 85, 89) gehalten ist, und dass bei einer Asynchronität zwischen erstem und zweitem Getriebezug (57, 58, 67, 68, 97, 98) der Versatz zwischen dem ersten und zweiten Getriebeteil (35, 39, 65, 69, 85, 89) ausgeglichen ist und der Verriegelungsbolzen (42, 72, 90) aus seiner Öffnungsstellung freigesetzt ist, so dass er sich aufgrund seiner Vorspannung in die Verriegelungsstellung bewegt.

16. Getriebe nach Anspruch 15, **dadurch gekennzeichnet, dass** das erste Getriebeteil (35, 65, 85) und das zweite Getriebeteil (39, 69, 89) jeweils einen einer Führung des Verriegelungsbolzens (42, 72, 90) dienenden Kanalabschnitt (44, 45, 46) aufweisen, und dass bei dem synchronen ersten und zweiten Getriebezug (57, 58, 67, 68, 97, 98) der Kanalabschnitt (44) des ersten Getriebeteils (35, 65, 85) und der Kanalabschnitt (45, 46) des zweiten Getriebeteils (39, 69, 89) versetzt zueinander sind.

17. Getriebe nach einem der Ansprüche 14 bis 16, **dadurch gekennzeichnet, dass** das Verriegelungselement mindestens eine Sperrklinke (47, 48) umfasst.

18. Getriebe nach Anspruch 17, **dadurch gekennzeichnet, dass** die Sperrklinke (47, 48) in dem ersten Getriebeteil (35) angeordnet ist und durch den Verriegelungsbolzen (42) ausgelöst wird.

19. Getriebe nach Anspruch 17 oder 18, **dadurch gekennzeichnet, dass** die Sperrklinke (47, 48) in der Verriegelungsstellung an einem Verriegelungsprofil (52) der Getriebebasis (51) angreift.

20. Getriebe nach einem der Ansprüche 14 bis 16, **dadurch gekennzeichnet, dass** an der Getriebebasis eine Lochscheibe (73) mit mehreren Durchgangsöffnungen (78) oder Sacklöchern angeordnet ist, in die der Verriegelungsbolzen (72) in der Verriegelungsstellung zumindest teilweise eintaucht.

21. Treppenlift, **dadurch gekennzeichnet, dass** er mit einem Getriebe (1, 30, 60, 80) nach einem der vorhergehenden Ansprüche ausgestattet ist.

22. Verfahren zur Verriegelung eines Getriebes nach einem der Ansprüche 1 bis 20, **dadurch gekennzeichnet, dass** bei einer Asynchronität zwischen dem ersten und zweiten Getriebezug (27, 28, 57, 58, 67, 68, 97, 98) das Verriegelungselement (19, 20, 42, 47, 48, 72, 90) in eine Verriegelungsstellung übergeht, in der es den ersten Getriebezug (27, 57, 67, 97) verriegelt.

## Claims

1. Transmission (1, 30, 60, 80)
with a transmission base (26, 51),
with a drive shaft (3, 33, 63) that can be connected to a motor (2),
with an output shaft that can be connected to a machine or a component to be driven,
with a first gear train (27, 57, 67, 97) that is operatively connected with the drive shaft (3, 33, 63),
with a second gear train (28, 58, 68, 98) that is also operatively connected with the drive shaft (3, 33, 63) and is thereby synchronised with the first gear train (27, 57, 67, 97),
with a first transmission part (5, 35, 65, 85) contained in the gear train (27, 57, 67, 97),
with a second transmission part (17, 39, 69, 89) contained in the second gear train (28, 58, 68, 98), which second transmission part (17, 39, 69, 89) is synchronized with the first transmission part (5, 35, 65, 85) if the first gear train (27, 57, 67, 97) is free of damage,
with a locking element (19, 20, 42, 47, 48, 72, 90) arranged on the first transmission part (5, 35, 65, 85) or on the second transmission part (17, 39, 69, 89),
**characterised in that**
only the first gear train (27, 57, 67, 97) is operatively connected to the output shaft and
that in the event of asynchrony of the first gear train (27, 57, 67, 97) relative to the second gear train (28, 58, 68, 98) caused by damage to the first gear train (27, 57, 67, 97) the locking element (19, 20, 42, 47, 48, 72, 90) is supported at the transmission base (26, 51) and at the first transmission part (5, 35, 65, 85) outside the surface of engagement with other gear parts and locks the first transmission part (5, 35, 65, 85) relative to the transmission base (26, 51).

2. Transmission according to claim 1, **characterised in that** the first transmission part (5) is an output gear that is connected in a rotationally secure manner to a locking disc (9) and is driven by the drive shaft (3) together with the output gear for rotation around a geometric output gear axis of rotation (8), and that the locking disc (9) has several recesses.

3. Transmission according to claim 2, **characterised in that** the locking disc (9) has several protrusions (21) extending radially outwards and provided with back tapers, and that the recesses are formed by the gaps between the protrusions (21).

4. Transmission according to claim 3, **characterised in that** the recesses are formed by through-holes in the locking disc (9).

5. Transmission according to one of the claims 2 to 4, **characterised in that** the second transmission part (17) has a locking oscillator that is movably arranged at the transmission base (26) and driven by the second gear train (28) to perform a reciprocating motion.

6. Transmission according to claim 5, **characterised in that** at least two locking pins (19, 20) are arranged on the locking oscillator (17) which form the locking elements, and that the locking pins (19, 20) in the event of synchronous motion of the first and second gear train (27, 28) are alternately loosely arranged in a recess of the locking disc (9), and that in the event of asynchrony between the first and second gear train (27, 28) at least one of the two locking pins (19, 20) is arranged in a recess and contacts at the locking disc (9) in such a manner that it blocks the locking disc (9).

7. Transmission according to claim 5 or 6, **characterised in that** the locking oscillator (17) is rotatably arranged at the transmission base (21) around an oscillator rotational axis (22) and the reciprocal motion is a rocking motion around the oscillator rotational axis (22).

8. Transmission according to claim 7, **characterised in that** the oscillation rotational axis (22) is parallel to the output gear rotational axis (8).

9. Transmission according to claim 7, **characterised in that** the oscillation rotational axis (22) is perpendicular to the output gear rotational axis.

10. Transmission according to one of the claims 7 to 9, **characterised in that** the locking oscillator (17) is in the form of a two-armed locking lever, and that on each of the two arms (17a, 17b) of the locking lever there is a locking pin (19, 20).

11. Transmission according to claim 5 or 6, **characterised in that** the locking oscillator (17) is movably arranged at the transmission base (21) along a linear axis and the reciprocal motion is a linear motion.

12. Transmission according to claim 11, **characterised in that** the linear axis is parallel to the output gear rotational axis (8).

13. Transmission according to claim 7, **characterised in that** the linear axis is perpendicular to the output gear rotational axis.

14. Transmission according to claim 1, **characterised in that** the first transmission part (35, 65, 85) and the second transmission part (39, 69, 89) are rotating transmission parts and have the same geometric rotational axis (38), that in the event of synchronous motion of the first and second gear train (57, 58, 67, 68, 97, 98) the locking element (42, 47, 48, 72, 90) has an open position, and that the locking element (42, 47, 48, 72, 90) in the event of asynchrony between the first and second gear train (57, 58, 67, 68, 97, 98) has a locked position in which the first transmission part (35, 65, 85) is locked.

15. Transmission according to claim 14, **characterised in that** the locking element comprises a locking bolt (42, 72, 90) that is arranged to be displaceable parallel or orthogonally to the rotational axis (38) of the first and second transmission parts (35, 39, 65, 69, 85, 89) under pre-tension on the first or second transmission part (35, 39, 65, 69, 85, 89), that the locking bolt (42, 72, 90) is held in the open position by a preset offset between the first and second transmission parts (35, 39, 65, 69, 85, 89), and that with asynchrony between the first and second gear train (57, 58, 67, 68, 97, 98) the offset between the first and second transmission parts (35, 39, 65, 69, 85, 89) is compensated and the locking bolt (42, 72, 90) is released from its open position so that it moves to the locked position due to its pre-tension.

16. Transmission according to claim 15, **characterised in that** the first transmission part (35, 65, 85) and the second transmission part (39, 69, 89) each have a runner section (44, 45, 46) that acts as a guide for the locking bolt (42, 72, 90), and that with synchronous first and second gear train (57, 58, 67, 68, 97, 98) the runner section (44) of the first transmission part (35, 65, 85) and the runner section (45, 46) of the second transmission part (39, 69, 89) are offset to one another.

17. Transmission according to one of the claims 14 to 16, **characterised in that** the locking element comprises at least one pawl (47, 48).

18. Transmission according to claim 17, **characterised in that** the pawl (47, 48) is arranged in the first transmission part (35) and is triggered by the locking bolt (42).

19. Transmission according to claim 17 or 18, **characterised in that** in the locked position the pawl (47, 48) engages at a locking profile (52) of the transmission base (51).

20. Transmission according to one of the claims 14 to 16, **characterised in that** a perforated disc (73) is arranged on the transmission base with several through-holes (78) or blind holes into which the locking bolt (72) at least partially dips in the locked position.

21. Stair lift **characterised in that** it is equipped with a transmission (1, 30, 60, 80) according to one of the previous claims.

22. Method for locking a transmission according to one of the claims 1 to 20, **characterised in that** in the event of asynchrony between the first and second gear train (27, 28, 57, 58, 67, 68, 97, 98) the locking element (19, 20, 42, 47, 48, 72, 90) switches to a locked position in which it locks the first gear train (27, 57, 67, 97).

## Revendications

1. Boîte de vitesses (1, 30, 60, 80)
avec une base (26, 51),
avec un arbre d'entraînement (3, 33, 63) pouvant être raccordé à un moteur (2),
avec un arbre de sortie pouvant être connecté à une machine ou un composant à entraîner,
avec un premier train d'engrenages (27, 57, 67, 97) relié de façon opérationnelle à l'arbre d'entraînement (3, 33, 63),
avec un deuxième train d'engrenages (28, 58, 68, 98) également relié de façon opérationnelle à l'arbre d'entraînement (3, 33, 63) et ainsi synchronisé avec le premier train d'engrenages (27, 57, 67, 97),
avec une première unité (5, 35, 65, 85) contenue dans le premier train d'engrenages (27, 57, 67, 97),
avec une deuxième unité (17, 39, 69, 89) contenue dans le deuxième train d'engrenages (28, 58, 68, 98) et fonctionnant de façon synchrone avec la première unité (5, 35, 65, 85) si le premier train d'engrenages (27, 57, 67, 97) est intact,
avec un élément de verrouillage (19, 20, 42, 47, 48, 72, 90) disposé sur la première unité (5, 35, 65, 85) ou sur la deuxième unité (17, 39, 69, 89) **caractérisée en ce que**,
seul le premier train d'engrenages (27, 57, 67, 97) est relié de façon opérationnelle à l'arbre de sortie et
**en ce que** l'élément de verrouillage (19, 20, 42, 47, 48, 72, 90), en cas d'asynchronisme du premier train d'engrenages (27, 57, 67, 97) - dû à l'endommagement de ce train (27, 57, 67, 97) - par rapport au deuxième train d'engrenages (28, 58, 68, 98), s'appuie sur la base (26, 51) et sur la première unité (5, 35, 65, 85) à l'extérieur de la surface engagée avec d'autres unités et arrête la première unité (5, 35, 65, 85) par rapport à la base (26, 51).

2. Boîte de vitesses selon la revendication 1, **caractérisée en ce que** la première unité (5) est une roue dentée de sortie, reliée de manière immobilisée en rotation à une plaque de verrouillage (9) et entraînée, via l'arbre d'entraînement (3), avec la roue dentée de sortie pour tourner autour d'un axe de rotation de la roue dentée de sortie (8) géométrique et **en ce que** la plaque de verrouillage (9) présente plusieurs cannelures.

3. Boîte de vitesses selon la revendication 2, **caractérisée en ce que** la plaque de verrouillage (9) présente radialement plusieurs saillies (21) à contre-dépouilles vers l'extérieur et que les cannelures résultent des espaces entre les saillies (21).

4. Boîte de vitesses selon la revendication 3, **caractérisée en ce que** les cannelures sont formées par les ouvertures de passage dans la plaque de verrouillage (9).

5. Boîte de vitesses selon l'une des revendications 2 à 4, **caractérisée en ce que** la deuxième unité (17) présente un oscillateur de verrouillage qui est disposé de façon mobile au niveau de la base (26) et effectue un mouvement de va-et-vient en étant entraîné par le deuxième train d'engrenages (28).

6. Boîte de vitesses selon la revendication 5, **caractérisée en ce que** l'oscillateur de verrouillage (17) est pourvu d'au moins deux goujons (19,
20) formant les éléments de verrouillage et **en ce que** les goujons (19, 20), en cas de mouvement synchrone des premier et deuxième trains d'engrenages (27, 28) sont placés en alternance de façon non fixe dans une cannelure de la plaque de verrouillage (9), et **en ce qu'**en cas d'asynchronisme entre les premier et deuxième trains d'engrenages (27, 28), au moins un des deux goujons (19, 20) est placé dans une cannelure et est appliqué contre la plaque de verrouillage (9) de telle façon qu'il bloque cette plaque (9).

7. Boîte de vitesses selon la revendication 5 ou 6, **caractérisée en ce que** l'oscillateur de verrouillage (17) pouvant être tourné autour d'un axe de rotation d'oscillateur (22) se trouve sur la base (21) et que le mouvement de va-et-vient est un mouvement de balancement autour de l'axe de rotation d'oscillateur (22).

8. Boîte de vitesses selon la revendication 7, **caractérisée en ce que** l'axe de rotation d'oscillateur (22) est parallèle à l'axe de rotation de roue dentée de sortie (8).

9. Boîte de vitesses selon la revendication 7, **caractérisée en ce que** l'axe de rotation d'oscillateur (22) est perpendiculaire à l'axe de rotation de roue dentée de sortie.

10. Boîte de vitesses selon l'une des revendications 7 à 9, **caractérisée en ce que** l'oscillateur de verrouillage (17) a la forme d'un levier de verrouillage à deux bras et qu'un goujon de verrouillage (19, 20) se situe sur chacun des deux bras (17a, 17b) du levier de verrouillage.

11. Boîte de vitesses selon la revendication 5 ou 6, **caractérisée en ce que** l'oscillateur de verrouillage (17) est disposé de façon mobile au niveau de la base (21), le long d'un axe linéaire, et **en ce que** le mouvement de va-et-vient est un mouvement linéaire.

12. Boîte de vitesses selon la revendication 11, **caractérisée en ce que** l'axe linéaire est parallèle à l'axe de rotation de roue dentée de sortie (8).

13. Boîte de vitesses selon la revendication 7, **caractérisée en ce que** l'axe linéaire est perpendiculaire à l'axe de rotation de roue de sortie.

14. Boîte de vitesses selon la revendication 1, **caractérisée en ce que** la première unité (35, 65, 85) et la deuxième unité (39, 69, 89) sont des unités rotatives et qu'elles présentent le même axe de rotation (38) géométrique et **en ce qu'**en cas de mouvement synchrone des premier et deuxième trains d'engrenages (57, 58, 67, 68, 97, 98) l'élément de verrouillage (42, 47, 48, 72, 90) présente une position d'ouverture et **en ce que** l'élément de verrouillage (42, 47, 48, 72, 90) présente, en cas d'asynchronisme entre les premier et deuxième trains d'engrenages (57, 58, 67, 68, 97, 98), une position de verrouillage dans laquelle la première unité (35, 65, 85) est verrouillée.

15. Boîte de vitesses selon la revendication 14, **caractérisée en ce que** l'élément de verrouillage comprend un boulon de verrouillage (42, 72, 90) disposé de façon coulissable sous précontrainte parallèlement ou orthogonalement à l'axe de rotation (38) de la première ou deuxième unité (35, 39, 65, 69, 85, 89) sur la première ou deuxième unité (35, 39, 65, 69, 85, 89), et **en ce que** le boulon de verrouillage (42, 72, 90) est maintenu dans la position d'ouverture par un déport préréglé entre les première et deuxième unités (35, 39, 65, 69, 85, 89), et **en ce qu'**en cas d'asynchronisme entre les premier et deuxième trains d'engrenages (57, 58, 67, 68, 97, 98), le déport entre les première et deuxième unités (35, 39, 65, 69, 85, 89) est équilibré et que le boulon de verrouillage (42, 72, 90) est libéré de sa position d'ouverture de telle sorte qu'il se déplace dans la position de verrouillage du fait de sa précontrainte.

16. Boîte de vitesses selon la revendication 15, **caractérisée en ce que** la première unité (35, 65, 85) et la deuxième unité (39, 69, 89) disposent respectivement d'une section de canal (44, 45, 46) servant à guider le boulon de verrouillage (42, 72, 90) et **en ce qu'**en cas de fonctionnement synchrone des premier et deuxième trains d'engrenages (57, 58, 67, 68, 97, 98), la section de canal (44) de la première unité (35, 65, 85) et la section de canal (45, 46) de la deuxième unité (39, 69, 89) sont décalées entre elles.

17. Boîte de vitesses selon l'une des revendications 14 à 16, **caractérisée en ce que** l'élément de verrouillage comprend au moins un cliquet d'arrêt (47, 48).

18. Boîte de vitesses selon la revendication 17, **caractérisée en ce que** le cliquet d'arrêt (47, 48) est monté dans la première unité (35) et est déclenché par le boulon de verrouillage (42).

19. Boîte de vitesses selon la revendication 17 ou 18, **caractérisée en ce que** le cliquet d'arrêt (47, 48) se trouve dans la position de verrouillage sur un profilé de verrouillage (52) de la base (51).

20. Boîte de vitesses selon l'une des revendications 14 à 16, **caractérisée en ce que** la base dispose d'une plaque perforée (73) avec plusieurs ouvertures de passage (78) ou trous borgnes, dans lesquels le boulon de verrouillage (72) s'engage au moins partiellement dans la position de verrouillage.

21. Monte-escalier **caractérisé en ce qu'**il est équipé d'une boîte de vitesses (1, 30, 60, 80) selon l'une des revendications précédentes.

22. Procédé pour le verrouillage d'une boîte de vitesses selon les revendications 1 à 20, **caractérisé en ce qu'**en cas d'asynchronisme entre les premier et deuxième trains d'engrenages (27, 28, 57, 58, 67, 68, 97, 98) l'élément de verrouillage (19, 20, 42, 47, 48, 72, 90) se place dans une position de verrouillage dans laquelle il verrouille le premier train d'engrenages (27, 57, 67, 97).
